# EUROPEAN PATENT SPECIFICATION

(11) **EP 4 288 341 B1**
(45) Date of publication and mention of the grant of the patent: **08.07.2026**
(21) Application number: 22729867.6
(22) Date of filing: 11.05.2022
(51) Int. Cl.: B64D 37/32, A62C 3/08

(54) **SYSTEM AND METHOD FOR CONTROLLING HEAT LOAD OR PARASITIC LOAD IN A FLAMMABILITY REDUCTION SYSTEM OF AN AIRCRAFT**
SYSTEM UND VERFAHREN ZUR STEUERUNG DER WÄRMEBELASTUNG ODER PARASITÄREN LAST IN EINEM ENTFLAMMBARKEITSREDUKTIONSSYSTEM EINES FLUGZEUGS
SYSTÈME ET PROCÉDÉ POUR COMMANDE DE CHARGE THERMIQUE OU DE CHARGE PARASITE DANS UN SYSTÈME DE RÉDUCTION D'INFLAMMABILITÉ D'UN AÉRONEF

(30) Priority: 25.06.2021 US 202163214906 P; 25.06.2021 US 202163214951 P
(43) Date of publication of application: 13.12.2023
(73) Proprietor: Parker-Hannifin Corporation, Cleveland, Ohio 44124 (US)
(72) Inventor: METRULAS, Stephen, C., Tustin, California 92780 (US); HABERMAN, Eric, E., Redmond, Washington 98053 (US)
(74) Representative: Murgitroyd & Company
(86) International application number: PCT/US2022/028705
(87) International publication number: WO 2022/271283

(56) References cited:
- EP-A2- 3 632 510
- CN-A- 111 071 468
- US-A1- 2018 126 202
- US-B1- 8 801 831
- US-B2- 10 392 123
- US-B2- 10 392 123
- US-B2- 9 694 314
- US-B2- 9 694 314

## Description

### Technical Field

The present invention relates generally to a flammability reduction system such as an on-board inert gas generation system (OBIGGS), and more particularly to the use of heat load and/or pressure and/or flow to control an air separation module (ASM) of a flammability reduction system, such as for controlling heat load of the system and/or reducing parasitic load on the aircraft.

### Background

Aircraft may use an on board inert gas generating system ("OBIGGS") to reduce the oxygen content of the ullage in the fuel tank, and thereby reduce flammability. The OBIGGS accomplishes this by adding inert gas, such as nitrogen enriched air (NEA), to the ullage. The OBIGGS may produce NEA using permeable membranes in an air separation module (ASM). Pressurized air enters the ASM inlet and, as the air passes through the membranes, oxygen is separated from the air stream, whereby the remaining air is deemed to be nitrogen enriched. Due to normal levels of gas in the air, if all the oxygen is removed from air, about 98% of the remaining air is nitrogen. In conventional OBIGGS systems, the normal concentrations of oxygen in the NEA are usually above zero.

Pressurized air used for NEA generation will usually originate from either an engine bleed or from another pressure source within the aircraft. With an engine bleed system, compressed hot air is usually cooled by a heat exchanger before being ported or sent to the ASM. At the ASM outlet, the NEA is distributed to the ullage space of the fuel tank or tanks for the purpose of inerting the fuel tanks and reducing flammability exposure.

The following documents may provide technical background to this disclosure: US 10 392 123 B2 discloses a method for recovering air separation performance of an air separation module through a recovery system, involving determining whether purity is within tolerances and repeating adjusting or retuning steps if the purity is not within tolerances. US 8 801 831 B1 discloses an apparatus for controlling operation in an inert gas generation system for an aircraft, having a valve located downstream from an air separation module and controlling the amount of nitrogen relative to oxygen in the inert gas exiting the air separation module. US 2018/126202 A1 discloses a method for controlling the purity and flow rate relationship of an inert gas injected into a fuel tank, and an inerting system for carrying out the method. CN 111 071 468 discloses an energy recycling type fuel tank inerting system having a gas outlet formed with a flame arrester and a fan whose end is connected with a turbine expander, wherein oxygen enriched gas of the fan is fixed with a cabin. EP 3 632 510 A2 discloses a pressurized inerting system. US 9 694 314 B2 discloses a controller for controlling an on board inert gas generation system with an air separation module, having a logic unit for dynamically modulating a temperature setpoint for the inlet temperature to the separation module to provide a minimum temperature setpoint.

### Summary

In an engine bleed system, the pressurized air stream that feeds the ASM is extracted from the engine and therefore can produce parasitic load on the aircraft. The more air that is extracted the from the engine, the greater the performance penalty to the aircraft. Therefore, it generally is desirable to deliver the minimum amount of air flow needed for the ASM to provide sufficient inert gas to inert the fuel tank.

A conventional ASM is a passive device that will consume air partly as a function of the pressure of the air at the inlet as well as the performance state of the ASM. When the ASM is new, it will tend to accept more inlet flow and create more inert gas than it does when the ASM is at the end of its service life. To ensure the ASM will deliver an adequate amount of inert gas throughout its service life, the ASM usually is sized such that it will perform acceptably at the end of its service life. Consequently, for the time leading up to the end of the ASM's service life, the ASM will consume additional inlet flow and produce additional inert gas than it will at the end of its service life. This additional inlet flow has at least two undesirable characteristics. The first is that the additional flow is an additional parasitic burden on the aircraft. The second is a compounding effect that requires the components leading up to the ASM to be adequately sized to handle the additional flow associated with a newer ASM, making these associated components, such as heat exchangers or the like, larger and heavier than they would need to be to handle the ASM inlet flow near the end of its service life.

Another problem with conventional flammability reduction systems is that it is often difficult to predict when the ASM will no longer be effective to produce adequate NEA.

At least one aspect of the present disclosure provides a flammability reduction system and method with predictive monitoring of the ASM's health and its remaining useful life by detecting trends in ASM flow and/or oxygen content in the NEA.

According to the claimed invention, a flammability reduction system is provided as defined in appended claim 1. The system includes: an air separation module (ASM) configured to receive air at an inlet of the ASM and produce an inert gas; a flow sensor configured to measure air flow passing to the inlet of the ASM and an oxygen sensor configured to measure oxygen content of the inert gas produced by the ASM; and an electronic controller configured to compare (i) an actual flow rate of air passing to the inlet of the ASM compared against an expected flow rate of air passing to the inlet of the ASM, and/or (ii) an actual oxygen content of the inert gas produced by the ASM compared against an expected oxygen content of inert gas produced by the ASM, to thereby verify health of the ASM and/or predict air separation module life.

In exemplary embodiments, an actual NEA oxygen concentration is compared to expected rates of oxygen concentration to predict air separation module failure. Comparison of both trends of actual flow rate and oxygen concentration against expected rates of oxygen concentration and flow change better allows the controller to identify the onset of ASM failure and predict when the ASM will no longer be effective. The controller also may include a predictive health algorithm to generate predictions of the remaining useful life of the ASM. A data storage module may be affixed to the ASM upon which is stored service life history data of the ASM for the purposes of system control, on-wing health monitoring, off-wing forensic analysis or any other activity which benefits from knowledge of the service life history of the ASM. Such feature(s) provide significant advantage to aircraft maintenance when compared to conventional monitoring systems.

The following description and the annexed drawings set forth certain illustrative embodiments of the invention. These embodiments are indicative, however, of but a few of the various ways in which the principles of the invention may be employed. Other objects, advantages and novel features according to aspects of the invention will become apparent from the following detailed description when considered in conjunction with the drawings.

### Brief Description of the Drawings

The annexed drawings, which are not necessarily to scale, show various aspects of the invention.
Fig. 1 is a schematic diagram illustrating an exemplary flammability reduction in system in accordance with the present disclosure.
Fig. 2 is a flow chart illustrating an exemplary method in accordance with the present disclosure.
Fig. 3 is a flow chart illustrating an exemplary method in accordance with the present disclosure.
Fig. 4 is a flow chart illustrating an exemplary method in accordance with the present disclosure.
Fig. 5 is a flow chart illustrating an exemplary method in accordance with the present disclosure.
Fig. 6 is a flow chart illustrating an exemplary method in accordance with the present disclosure.
Fig. 7 is a flow chart illustrating an exemplary method in accordance with the present disclosure.

### Detailed Description

The principles and aspects according to the present disclosure have particular application for use in an on-board inert gas generating system (OBIGGS) of an aircraft that includes an air separation module (ASM) to supply nitrogen-enriched air (NEA) to the fuel tank or tanks of the aircraft, and thus will chiefly be designed in this context. It is understood, however, that the system can be used with other inerting systems for other applications, for example, inerting cargo holds and other void spaces in an aircraft, or may have applicability to non-aircraft applications where a need exists for a supply of relatively inert, nitrogen-enriched air.

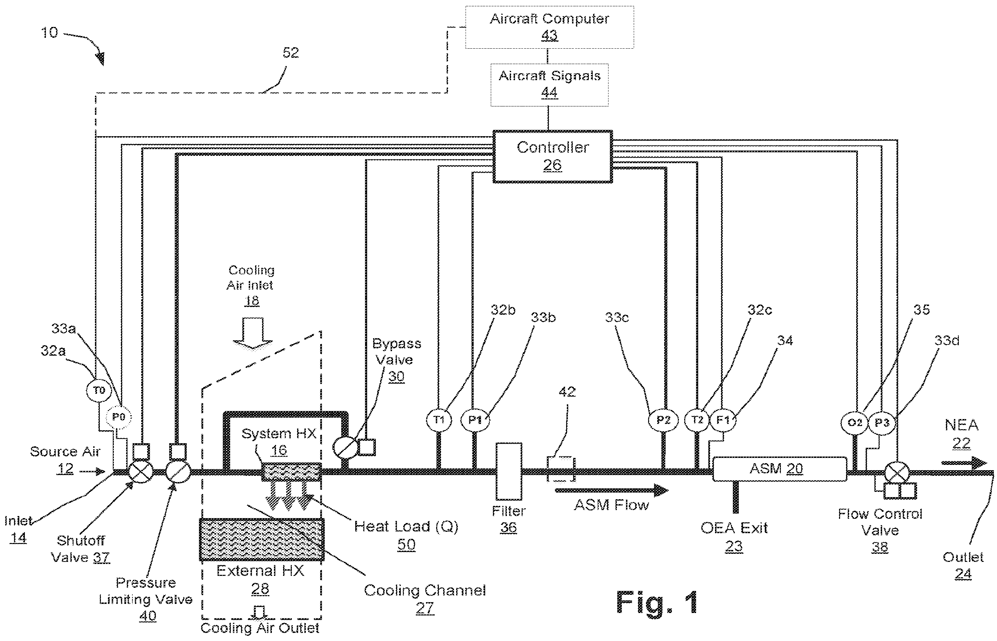

Fig. 1 illustrates an exemplary flammability reduction system 10, also referred to as an inerting system or air separation system, according to an embodiment of the present disclosure. As shown, the system 10 generally includes an air source 12 at an inlet 14 of the system 10, a heat exchanger 16 that exchanges heat from the air received from source 12 with cooling air 18, an ASM 20 that receives the air from the source 12 and produces NEA 22 that is distributed through an outlet 24 of the system 10, and an electronic controller 26 that is configured to control the system 10.

The air source 12 may be any suitable air source at the inlet 14 of the system 10. For example, the air source 12 at the inlet 14 may include compressed air, which may be received from bleed air from the aircraft engine. As such, the air from the air source 12 may have a normal composition according to the environment. Typically, the bleed air from the aircraft engine is hot air relative to the external aircraft environment. It is understood that in some embodiments according to the present disclosure, other compressed air sources may be utilized, such as atmospheric air compressed via a compressor driven by a prime mover, or the like. Generally, the air source 12 may be considered.

The air source 12 at the inlet 14 is in fluid communication with an inlet of the heat exchanger 16, which is in the flow path of the cooling air 18, and thus exchanges the heat from the air from the source 12 with the cooling air 18. In this manner, the air temperature at an outlet of the heat exchanger 16 is lower than the temperature at the inlet of the heat exchanger 16. The cooling air 18 may come from the external environment of the aircraft, such as via a flow channel 27 (e.g., ram air channel) in the wing to body fairing of the aircraft. An additional external heat exchanger 28 also may be provided in the flow channel 27 as is conventional on some aircraft. The external heat exchanger 27 is downstream of the system heat exchanger 16, and thus the more heat removed from heat exchanger 16 can make the heat exchanger 28 work in a warmer environment and thus reduce effectiveness. The operation of the external heat exchanger 28 can have an impact on air cabin temperature, for example, and thus the warmer the heat exchanger 28, the warmer the cabin temperature.

The heat exchanger 16 of the system 10 may be any suitable heat exchanger or combination of heat exchangers, such as an air-to-air or air-to-liquid heat exchanger. As shown in the illustrated embodiment, a bypass valve 30, which may be a variable position valve, may be fluidly connected within a bypass line 32 having an inlet upstream of the inlet of the heat exchanger 16, and an outlet that is in downstream of the outlet of the heat exchanger 18. In this manner, the bypass valve 30 is connected in parallel with the heat exchanger 16, such that the bypass valve 30 also receives compressed air from the air source 12.

As is apparent in the illustration, based on a position of the bypass valve 30, a temperature of the air distributed downstream to an inlet of the ASM 20 can be varied, such as by mixing the cooled air from the output of the heat exchanger 16 with non-cooled air from the output of the bypass valve 30. As shown, the bypass valve 30 is operatively coupled to the electronic controller 26 (also referred to as controller 26) for controlling the position of the valve 30 and thus the temperature of the air passed downstream. This may be accomplished, for example, by reading the upstream air temperature via a first temperature sensor 32a and comparing this to a reading of the air temperature via a downstream temperature sensor(s) 32b or 32c. Alternatively or additionally, data from other sources may be used, including other system sensors or aircraft data from another controller of the aircraft. Such a system and method of controlling the air temperature distributed downstream to the ASM is described in U.S. Patent No. 9,694,314 by the present inventor and applicant.

The ASM 20 may be any suitable device that is configured to produce NEA 22, which may be distributed to an ullage of one or more fuel tanks of the aircraft. For example, the ASM 20 may be a conventional membrane-type ASM, having a bundle of hollow, permeable fiber membranes packaged in a cylindrical shell with an inlet and outlet at the ends of the shell and a side vent port. As shown in the illustrated embodiment, the pressurized air received downstream of the heat exchanger 16 enters the inlet of the ASM 20, and as it passes through the hollow fibers, oxygen is separated from the air stream due to diffusion through the fiber walls. Oxygen-enriched air (OEA) 23 may exit via the side vent port and may be exhausted overboard the aircraft.

As shown in the illustrated embodiment, the flammability reduction system 10 may include any number of components including flow control devices, sensors, or the like. For example, as noted above, the system 10 may include one or more temperature sensors 32a, 32b, 32c (collectively 32) for sensing temperature of the air at different locations along the flow path of the system 10. The system 10 also may include one or more pressure sensors 33a, 33b, 33c, 33d (collectively 33) for sensing pressure of the air at different locations along the flow path of the system 10. Likewise, one or more airflow sensors 34 may be provided for sensing the velocity of air flow or mass flow rate through the system 10. As shown, an oxygen sensor 35 may be provided at an outlet portion of the ASM 20 for detecting the concentration of oxygen (O₂) in the NEA 22 produced by the ASM 20. A filter 36 may be provided upstream of the ASM 20 for filtering the air and reducing contamination of the ASM 20. An upstream shutoff valve 37 may be provided for restricting air from passing through the heat exchanger 16 and the ASM 20, and a downstream flow control valve 38 is provided for controlling the amount of NEA 22 distributed to the ullage of the fuel tank(s). As shown, respective ones of these components (e.g., 32, 33, 34, 35, 37, 38) are operatively coupled to the controller 26 and respectively include suitable circuitry for gathering and sending information to the controller 26, and/or for being operated in response to the commands from the controller 26, thereby enabling control of the system 10.

The controller 26 may include any suitable apparatus, device(s), or machine(s) for processing data and issuing commands. This may include electronic control circuitry that is configured to carry out various control operations relating to control of the components of the system 10. The control circuitry may be special or general purpose circuitry. The controller may include, by way of example, a programmable processor, a computer, or multiple processors or computers. For example, the primary control circuit may include an electronic processor, such as a CPU, microcontroller or microprocessor. The controller may include, in addition to hardware, code that creates an execution environment for the computer program in question. Among their functions, to implement the features described herein, the control circuit and/or electronic processor may comprise an electronic controller that may execute program code embodied as the flammability reduction system control application. It will be apparent to a person having ordinary skill in the art of computer programming, and specifically in application programming for electronic and communication devices, how to program the device to operate and carry out logical functions and instructions associated with the control application. The computer program (also referred to as software or code), may be deployed in any form, including as a stand-alone program or as a module, component, subroutine, or other unit suitable for use in a computing environment.

One concern with such a flammability reduction system 10 is that the pressurized air stream from the source 12 can place demands on other systems of the aircraft. For example, in an engine bleed-type flammability reduction system, the air source 12 receives bleed air from the aircraft engine, which can produce a parasitic load on the aircraft that imposes a performance penalty (e.g., greater fuel consumption). Moreover, depending on the flow requirements of the system 10, and particularly that of the ASM 20 for producing a desired amount of NEA 22, associated components of the system, such as the heat exchanger 16; valves 30, 37, 38; and/or sensors (e.g. flow sensor 34) may need to be sized appropriately. Because most conventional ASMs will tend to accept more inlet flow and produce more NEA when new compared to at the end of its service life, conventional flammability reduction systems may not compensate for this change in flow over time and thus tend to oversize these associated components, resulting in unneeded weight.

Accordingly, at least one aspect of the present disclosure provides the flammability reduction system 10 with means for variable pressure limitation that solves one or more problems of conventional systems, such as by enabling reductions in the sizing of support components and/or reducing the amount of parasitic drag caused by using the system 10. Such a flammability reduction system 10 with variable pressure limitation therefore will cost less to operate due to reduction in system flow rates and reductions in system weight.

In exemplary embodiments, the variable pressure limitation of the system 10 is provided by at least one pressure limiting valve 40 that is configured to modulate air pressure through the system 10, and which may be controlled by the controller 26 based on one or more parameters of the system 10. Such a modulating pressure limiting valve 40 can dynamically control the pressure of the air passing to the inlet of the ASM 20 based on a defined pressure setpoint and/or a defined flow rate setpoint, thereby reducing variance in ASM flow demand and/or ASM performance. The pressure limiting valve 40 may be any suitable valve that is configured to modulate pressure between open and closed positions, such as butterfly valve that is adjustable at increments between its open and closed positions via an actuator, such as a stepper-motor, which is controlled by the controller 26. In the illustrated embodiment, the modulating pressure limiting valve 40 is located upstream of the system heat exchanger 16, although it is understood that the modulating pressure limiting valve 40 could be located at another position within the system 10, such as at position 42 between the heat exchanger 16 and ASM 20.

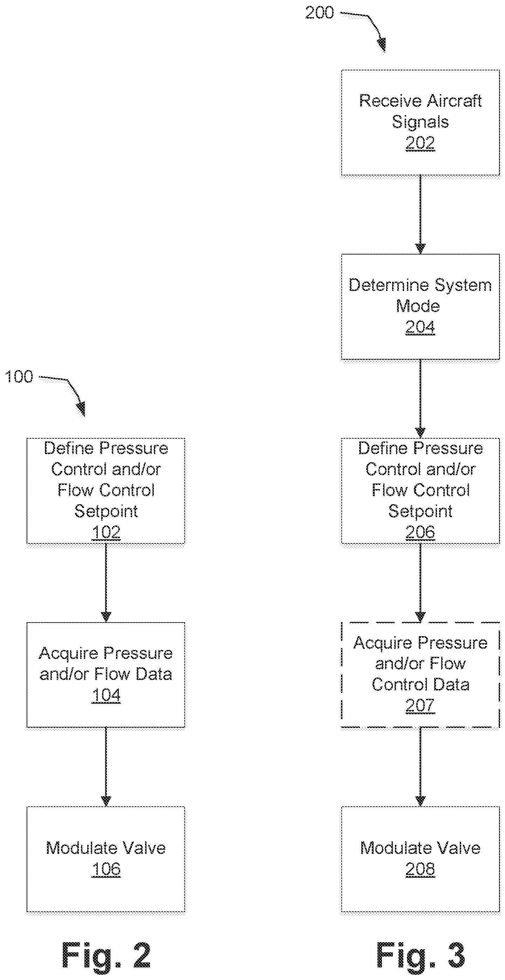

Turning to Fig. 2, shown is an exemplary logical operation 100 for dynamically modulating the pressure limiting valve 40 to regulate the desired pressure of air passing to the inlet of the ASM based at least upon a defined pressure setpoint and/or defined flow rate setpoint, in which the exemplary method may at least be partially executed by the controller 26. In the illustrated method 100, the pressure limiting valve 40 is controlled based at least upon an actual sensed air pressure and/or actual sensed air flow rate passing to the inlet of the ASM 20. As noted above, such a pressure limiting system can reduce the burden of parasitic drag, reduce heat load, and/or limit consumption to the ASM 20, thereby improving ASM life.

As shown, at step 102, the method includes defining a pressure control setpoint and/or a flow control setpoint for the air passing to the inlet of the ASM 20. The defined pressure control setpoint and/or a flow control setpoint may be a predetermined setpoint that is based upon the construction of the system 10, and particularly the ASM 20. For example, the defined pressure control setpoint and/or a flow control setpoint may be the minimum air pressure and/or flow rate at the air inlet to the ASM 20 that produces a prescribed or minimum acceptable inerting system performance condition, including for example oxygen concentration of the NEA 22 at an output of the ASM 20. This defined pressure control setpoint and/or a flow control setpoint may include a particular setpoint value, or may include a range of values about a nominal setpoint value, such as within a tolerance range of plus-or-minus 10% of the nominal setpoint value. The tolerance level may be obtained for determining high and low thresholds for increasing or decreasing the pressure setpoint and/or a flow rate setpoint. The defined pressure control setpoint and/or a flow control setpoint, including the nominal value(s) and/or tolerance level may be stored in memory of the controller 26, calculated by the controller 26, or provided by an external device, such as a flight control computer 43 (Fig. 1), or the like. The defined pressure setpoint and/or a flow control setpoint may be a predefined static setpoint, or may be a dynamically adjustable defined pressure setpoint that is based on the state of the system 10. For example, a database including a lookup table may be used to adjust the defined pressure setpoint and/or a flow rate setpoint based on certain parameters, such as over the life of the ASM 20, or the defined pressure setpoint and/or a flow control setpoint may be adjusted more dynamically based on other aircraft characteristics, such as flight mode, engine performance or the like. Non-limiting examples of such aircraft characteristics are described in connection with Fig. 3, below. It is also understood that the pressure control scheme may be used to control other performance parameters of the system, for example limiting inlet pressure as a precautionary feature or enhancement, or to modulate system performance based on demand. For example, if the flight is short, at low cruise altitude, and there is still a significant amount of fuel in the tank at the top of descent, the system could respond with a reduced level of inerting system performance and associated flow demand.

At step 104, the controller 26 acquires pressure data and/or a flow rate data of the air passing to the inlet of the ASM 20. The pressure and/or flow rate of the air passing to the ASM may be acquired at any suitable location in the system upstream of the inlet of the ASM. In exemplary embodiments, the pressure data and/or flow data includes readings of the actual air pressure and/or flow rate sensed by the pressure sensor 33c and/or flow rate sensor 34 at a location proximal the inlet of the ASM 20, from which this data is communicated to the controller 26 via a suitable communications link. Such pressure data and/or flow rate data may be used to gather information about the pressure and/or flow rate as close to the ASM inlet port as practical. However, pressure and/or flow readings taken further upstream than the ASM inlet can be acceptable, provided the pressure and/or flow loss characteristics in the fluid circuit upstream of the ASM 20 are well understood. For example, gathering pressure data and/or flow data upstream of a large and/or variable pressure loss source, such as a filter, may not provide an accurate characterization of ASM 20 inlet pressure or flow rate to the inlet.

At step 106, the controller 26 commands modulating the pressure limiting valve 40 based on the define pressure setpoint and/or flow setpoint from step 102. In the illustrated embodiment, this step of modulating the pressure limiting valve includes the controller 26 comparing the pressure and/or flow data acquired at step 104 with the pressure control setpoint and/or flow control setpoint defined at step 102. Based on this comparison, the controller 26 will determine whether to increase or decrease the air pressure and/or flow going to the ASM inlet by commanding the actuator of the pressure limiting valve 40 to further open or further close the valve. For example, if the comparison at step 106 determines that the actual air pressure of air passing to the inlet of the ASM 20 is greater than the defined pressure control setpoint, the controller 26 will command the pressure limiting valve 40 to modulate to a more restrictive position, thereby reducing the actual pressure toward the defined pressure setpoint. In moving toward the defined pressure setpoint, the controller 26 may obtain multiple readings of the pressure data and/or flow data and make incremental changes toward the setpoint until the defined pressure setpoint and/or flow setpoint is substantially achieved. Such control logic may include PID loop logic, for example, as is well-understood by those having ordinary skill in the art. It is of course understood that fluctuations in actual air pressure and/or flow rate may inhibit the controller 26 from achieving and maintaining the defined pressure setpoint value exactly, and the controller 26 may continue to read data from the pressure sensor 33c and/or flow sensor 34 and modulate the valve 40 to achieve an acceptable value within a tolerance level or range of the setpoint value. The exemplary method 100 may be advantageous in that when excessive pressure and/or flow rate is detected in the air passing to the ASM inlet, the controller modulates the pressure limiting valve to a more restrictive position. Limiting to a pressure setpoint and/or flow setpoint, such as within a defined pressure and/or flow range, reduces ASM flow variance due to engine bleed pressure fluctuations, and can limit overuse of ASMs during high source pressure conditions. Reducing pressurized air consumption also will reduce the burden of parasitic drag. Limiting airflow consumption also reduces the potential for harmful contaminants to damage the ASM, thus improving ASM life.

Referring to Fig. 3, another exemplary logical operation 200 is shown for dynamically modulating the pressure limiting valve 40 to regulate the desired pressure of air passing to the inlet of the ASM based at least upon a defined pressure setpoint and/or flow rate setpoint. Similarly to the method 100, the method 200 may include logic that is at least partially executed by the controller 26. In the illustrated method 200, the pressure limiting valve 40 is controlled based at least upon one or more aircraft signals 44 (Fig. 1). Limiting the pressure to the ASM inlet in this manner both limits flow variance due to engine source pressure, and further reduces flow and/or heat load during periods of operation when the demand for NEA is low.

At step 202, the method 200 includes receiving the aircraft signals 44 into the controller 26. The aircraft signals 44 may be received from one or more other controller(s) or computer(s) of the aircraft, or from one or more other sensors on the aircraft, which such device(s) may include measurement equipment and/or a flight control computer 43 used for flight performance. For example, the aircraft signals 44 may include aircraft data, such as atmospheric pressure and temperature, altitude, vertical speed, bleed pressure, engine performance (speed, etc.), flight schedule (duration, remaining time, etc.), fuel temperature; or other flight mode indicators such as climbing, descending, cruising; or the like.

At step 204, the controller 26 determines a system mode at which to control the pressure limiting valve 40 based on at least the received aircraft signals in step 202. The system mode may be indicative of aircraft system demand (e.g., engine demand, acceleration, deceleration, etc.) or flight profile (e.g., climb, descend, cruise, altitude, duration, etc.). Accordingly, each system mode (e.g., climb, descend, cruise, etc.) may have a different pressure setpoint value associated with the mode. For example, climbing may place high system demand on the aircraft engine in which case it may be desirable to operate the flammability reduction system 10 with low pressure (low use) to reduce parasitic drag, and thus the "climb" mode may adjust the control pressure setpoint to a low value or range of values. On the other hand, cruising at altitude may have low engine demand and high demand for the flammability reduction system 10 initially, and thus a "cruise" mode may adjust the control pressure setpoint to a high value or range of values until a highly inert condition is achieved in the fuel tank. Subsequently, the system may be operated at a lower pressure during cruise that would be sufficient to keep the system warm but maintain a minimum level of bleed flow demand. As the aircraft begins descending, maximum pressure would be sent to the ASM to maximize system performance and minimize the amount of outside air entering the fuel tank through the vent. In this manner, the system 10 using the aircraft signals 44 can balance the flight demands with the demands of the system 10. It is understood that these modes are exemplary, and greater or fewer modes with greater or fewer pressure setpoints may be used.

At step 206, the controller 26 determines the pressure control setpoint and/or flow control setpoint for the pressure limiting valve 40 based on the determined system mode in step 204. This determined pressure control setpoint and/or flow control setpoint may include a particular setpoint value, or may include a range of values about a nominal setpoint value, such as within a tolerance range of plus-or-minus 10% of the nominal setpoint value, similarly to that described in connection with step 102 above. The determination of the setpoint may be accomplished via a database including a lookup table or tables having the mode and corresponding pressure setpoint, for example.

At step 207, the controller 26 may verify and further control the pressure limiting valve 40 by acquiring pressure data and/or flow data, similarly to that described in connection with step 104 above, including acquiring readings of the actual air pressure sensed by the pressure sensor 33c and/or actual flow rate sensed by the flow rate sensor 34.

At step 208, the controller 26 commands modulating the pressure limiting valve 40 based on the determined pressure setpoint and/or flow setpoint from step 206 and the determined system mode at step 204. This step of modulating the pressure limiting valve 40 may be similar to that of step 106, and may include the controller 26 comparing the pressure and/or flow data acquired at step 207 with the pressure control and/or flow control setpoint determined at step 206, but which alternatively or additionally may include control based on the system mode identified in step 204. Based on this comparison, the controller 26 will determine whether to increase or decrease the air pressure going to the ASM inlet by commanding the actuator of the pressure limiting valve 40 to further open or further close the valve.

The exemplary method 200 is advantageous in that use of a variable pressure and/or flow limitation setpoint that changes based on the readings of aircraft provided signals (which may establish a system mode) both limits flow variance due to engine source pressure, and further reduces flow/heat load during periods of operation when the demand for product flow is low.

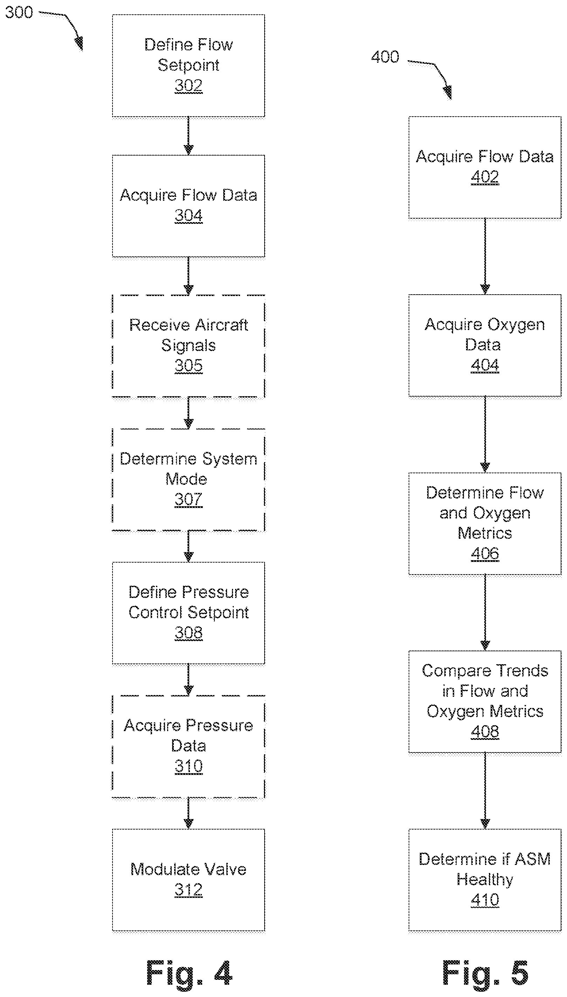

Referring to Fig. 4, another exemplary logical operation 300 is shown for dynamically modulating the pressure limiting valve 40 to regulate the desired pressure of air passing to the inlet of the ASM based on a defined pressure setpoint. Similarly to the above-described methods, the method 300 may include logic that is at least partially executed by the controller 26. In the illustrated method 300, the pressure limiting valve 40 is controlled based at least upon a defined flow setpoint for the system 10. Additionally, the method 300 may control the valve 40 based upon aircraft signals 44 to follow an airflow schedule over the course of a flight profile, for example. Such pressure control based on air flow and/or flight profile can define the flow necessary to provide the proper quality of NEA 22 flow with a minimum performance ASM 20.

At step 302, the method 300 includes defining a flow setpoint for the air passing to the inlet of the ASM 20. The defined flow setpoint may be a predetermined setpoint that is based upon the construction of the system 10, and particularly the ASM 20. For example, the defined flow setpoint may be the minimum flow at the air inlet to the ASM 20 that produces a prescribed or minimum acceptable oxygen concentration of the NEA 22 at an output of the ASM 20. This defined flow setpoint may include a particular setpoint value, or may include a range of values about a nominal setpoint value, such as within a tolerance range of plus-or-minus 10% of the nominal setpoint value. The defined flow setpoint, including the nominal value(s) and/or tolerance level may be stored in memory of the controller 26, calculated by the controller 26, or provided by an external device, e.g., a flight control computer or the like. The defined flow setpoint may be a predefined static setpoint, or may be a dynamically adjustable defined flow setpoint that is based on the state of the system 10. For example, a database including a lookup table may be used to adjust the defined flow setpoint based on parameters, such as over the life of the ASM 20, or the defined flow setpoint may be adjusted more dynamically based on other aircraft characteristics, described below.

At step 304, the controller 26 acquires flow data of the air passing to the inlet of the ASM 20. In exemplary embodiments, the flow data includes readings of the actual air flow sensed by the flow sensor 34 upstream of the ASM 20, which this data is communicated to the controller 26 via a suitable communications link. Such flow data may be used to gather information about the air flow rate as close to the ASM inlet port as practical, however, air flow readings taken further upstream than the ASM inlet can be acceptable, provided any flow loss characteristics in the fluid circuit upstream of the ASM 20 are well understood.

At step 305, the method 300 may include receiving the aircraft signals 44 into the controller 26, similarly to that described in connection with step 202, above. The aircraft signals 44 may include aircraft data received from one or more other controller(s) or computer(s) of the aircraft, or from one or more other sensors on the aircraft. At step 307, the controller 26 may determine a system mode based on the aircraft signals 44, similarly to that described above in connection with step 204, in which the system mode may be indicative of aircraft system demand (e.g., engine demand, acceleration, deceleration, etc.) or flight profile (e.g., climb, descend, cruise, altitude, duration, etc.).

At step 308, the controller 26 utilizes the flow data acquired in step 304 and the aircraft signals (step 305) and/or mode (e.g., flight schedule) (step 307) to determine the pressure control setpoint of the valve 40 based on an airflow schedule over the course of the flight profile.

At step 310, the controller 26 may verify and further control the pressure limiting valve 40 by acquiring pressure data, similarly to that described in methods 100, 200, including acquiring readings of the actual air pressure sensed by the pressure sensor 33c.

At step 312, the controller 26 commands modulating the pressure limiting valve 40 based at least upon the determined pressure setpoint from step 308, which may be similar to that described in methods 100, 200. In modulating the valve 40, the controller 26 may compare one or more of: (i) the pressure data acquired at step 310 with the pressure control setpoint determined at step 308, (ii) the defined flow setpoint at step 302 compared to the acquired flow data at step 304, and/or (iii) the determined system mode at step 307. Based on this comparison, the controller 26 will determine whether to increase, decrease or maintain the air pressure going to the ASM inlet by commanding the actuator of the pressure limiting valve 40 to further open or further close the valve.

The method 300 may have the advantages of the method 100 and 200, with an added advantage of substantially reducing ASM flow variance between a brand new ASM 20 and the ASM 20 at the end of its service life, without reducing NEA 22 output flow below minimum levels. In other words, the method 300 enables an adequate flow to provide a proper quality of NEA 22 with a minimum performance ASM 20. For example, due to flow increases for higher performing ASMs, it may be the case that the flow schedule according to method 300 can be exceeded, in which case the controller 26 may determine that the pressure setpoint should be reduced. The predefined schedule may be a predefined pressure schedule, a predefined flow schedule, a flight profile, a system flow, or based on aircraft parameters including at least one of altitude, vertical speed, engine source pressure, or the like.

A concern with some flammability reduction systems is that it can be difficult to predict when the ASM will no longer be effective to produce adequate NEA.

Accordingly, at least one aspect of the present disclosure provides a flammability reduction system and method with means for predictively monitoring the health of the ASM and its remaining useful life by detecting trends in the ASM performance. For example, such a system and method may measure an actual air flow to the inlet of the ASM and/or an actual oxygen content of NEA produced by the ASM, and then may compare these actual values to expected values of air flow and/or oxygen content, to thereby verify health of the ASM and/or predict air separation mode life.

The flammability reduction system with health monitoring may be similar to, or the same as, the flammability reduction system 10 illustrated in Fig. 1, including the system heat exchanger 16, the ASM 20, the controller 26, and various other sensors or flow control devices. The flammability reduction system with health monitoring, however, does not require the use of the pressure limiting valve 40 and associated pressure control. Instead, the flammability system with health monitoring may use one or more flow sensors 34 to measure ASM inlet air flow and/or one or more oxygen sensors 35 to measure oxygen content of NEA 22, in accordance with the method described below. It is of course understood that the pressure limiting valve 40 and the associated pressure control methods according to one or more of Figs. 1-4 could be used in conjunction with the health monitoring system. Accordingly, reference will be made to Fig. 1 for the description of components used in the flammability reduction system with health monitoring (also referred to herein with reference numeral 10).

Turning to Fig. 5, an exemplary method 400 is shown for operating the flammability reduction system 10 to predictively monitor the health of the ASM 20 and its remaining useful life by detecting trends in ASM flow and/or oxygen metrics. The method 400 may be at least partially executed by the controller 26 via suitable logic. As noted above, the method 400 or the system 10 can operate independently (i.e., without) the pressure limiting valve 40, and thus may operate independently from methods 100, 200 and 300. It is understood, however, that the foregoing description of the system 10 and methods 100, 200, 300 are equally applicable to the method 400, and therefore steps may be substituted for one another or used in conjunction with one another where applicable.

As shown in the illustrated embodiment, the method 400 may include acquiring flow data at step 402. In exemplary embodiments, the flow data includes readings of the actual air flow sensed by the flow sensor 34 upstream of the ASM 20, which this data is communicated to the controller 26 via a suitable communications link.

At step 404, the controller 26 may acquire oxygen data from the NEA 22 produced by the ASM 20. In exemplary embodiments, the oxygen data is an actual oxygen (O₂) concentration in the NEA 22 which is sensed by the oxygen sensor 35 downstream of the ASM outlet.

At step 406, the controller 26 determines flow and oxygen metrics based on the data acquired in steps 404 and 406. These metrics may be stored in suitable memory of the controller 26, or an external memory outside of the controller 26 which the controller 26 may access via a suitable communications link. For example, the metrics may include air flow, oxygen concentration and ASM pressure loss data over a period of time. In exemplary embodiments that include a pressure limiting valve 40, the controller 26 may transition to a "health monitoring mode" in which the controller 26 commands the pressure limiting valve 40 to vary pressure and then reads the corresponding responses of flow data and oxygen data.

At step 408, the controller 26 compares trends in the flow and oxygen metrics from step 406, and then at step 410 the controller 26 determines whether the ASM 20 remains healthy. For example, based on experimental data, the ASM 20 may have known relationship between varying levels of oxygen concentration and air flow rate into or NEA flow rate out of the ASM 20. The comparison in step 408 may compare the actual operational trends from step 406 and compare these to the known "healthy" trends of the ASM 20. These predefined known trends may be stored in suitable memory, such as in the controller 26, via a database including table, for example. Comparison of both trends against expected rates of oxygen concentration and flow change allows the controller 26 to identify the onset of ASM degradation and predict when the ASM 20 will no longer be effective. The method 400 also enables the controller 26 to detect whether it is the ASM 20 that is losing effectiveness, or the sensor(s) of the system 10. By way of non-limiting example, if the controller 26 detects that the oxygen concentration is increasing beyond an acceptable level for suitable NEA 22, then this may be an indication that either the ASM 20 is losing effectiveness, or that the oxygen sensor 35 is going bad. To test whether it is the ASM 20 losing effectiveness, the trend in oxygen data can be compared against the trend in flow data to see if it correlates with the predefined known data for a healthy ASM.

The data according to method 400, including the comparisons and determinations of the ASM health, may be stored in suitable memory of the controller 26, or another computer or memory storage device of the aircraft, such as the aircraft computer 43, for example. This data can then be downloaded or otherwise communicated to maintenance personnel to assess whether the ASM 20 needs replacement.

Alternatively or additionally, as shown at step 409, the data according to method 400, including comparisons and determinations of ASM healthy, may be stored in an on-board memory module 48 (Fig. 1) mounted to the ASM 20 or other component. The memory module 48 may include any suitable device for storing the data and may include any suitable forms of non-volatile memory, media or memory devices, including by way of example semiconductor memory device(s). The memory module 48 being fixed to the ASM 20 will enable the manufacturer of the ASM 20, or the manufacturer of the flammability reduction system 10, to assess why the ASM 20 lost effectiveness. This is advantageous when the data from the controller 26 is maintained by the aircraft operator and is difficult to retrieve, and so the onboard memory module 48 enables the history of the ASM 20 to remain with the ASM for both system control, on-wing health monitoring as well as forensic analysis of ASMs removed from service.

The exemplary method 400 is advantageous in that it provides comparison of both trends of actual flow rate and oxygen concentration against expected rates of oxygen concentration and flow change to better allow the controller to identify the onset of ASM failure and predict when the ASM will no longer be effective. Such feature(s) provide significant advantage to aircraft maintenance.

Yet another concern with flammability reduction systems is that heat load in terms of heat rejection from the system to the channel of cooling air can have a significant impact on the sizing of the system heat exchanger(s). For example, one problem with conventional flammability reduction systems is that the system heat exchanger is sized for maximum heat load and cooling capacity for certain maximum use periods during flight, however there are periods of flight in which cooling capacity is much greater than necessary and the heat exchanger is considered oversized. Consequently, other components in the system also may be oversized. This can then lead to increased weight and deceased performance of the aircraft.

Accordingly, at least one aspect of the present disclosure provides a flammability reduction system and method with means for heat load control that solves one or more problems of conventional systems, such as by enabling reductions in the sizing of support components. The system and method may calculate heat load of a system component, and then vary the temperature of the air through the system to control the heat load to within a defined range. For example, the flammability reduction system may vary the temperature of the air through the system to reject more heat when excess cooling capacity is available (e.g., at less critical periods) and to reduce heat rejection when cooling capacity is at a premium (e.g., critical to overall aircraft performance). Such a flammability reduction system with heat load control results in a lower weight of system components, such as the system heat exchanger(s), than would be realized for a similar conventional system without such heat load control. This enables the exemplary system to cost less to operate due to reductions in system weight.

The heat load of the system may be determined in any number of ways, including without limitation, using a sensed temperature of air passing to the ASM inlet, a sensed flow rate of the air passing to the ASM inlet, one or more system sensors connected to other devices that then feed the controller with the temperature or calculated heat load, and/or aircraft signals such as vertical speed, altitude, ambient temperature, etc., that can then be used in calculation of heat load or appropriate setpoint temperature. The heat load may be controlled in any number of ways, including without for limitation, varying the temperature of the air through the system and/or varying the flow rate of air through the system. Non-limiting examples of such methods will be described in further detail below.

The flammability reduction system with heat load control may be similar to, or the same as, the flammability reduction system 10 illustrated in Fig. 1, including the system heat exchanger 16, the ASM 20, the controller 26, and various other sensors or flow control devices. The flammability reduction system with heat load control, however, does not require the use of the pressure limiting valve 40 and associated pressure control. Instead, the flammability system with heat load control calculates heat load (shown at 50 in Fig. 1 as heat rejection from the system heat exchanger 16) and then may control heat load by varying the temperature, such as via the bypass valve 30 to control an amount of bypass flow around the system heat exchanger 16. It is of course understood that the pressure limiting valve 40 and/or the associated pressure control methods according to one or more of Figs. 1-5 could be used in conjunction with the heat load control system. For example, alternatively or additionally to a variable temperature control method using bypass valve 30, the heat load may be controlled by varying air flow rate via a modulating valve in the system, such as the modulating pressure limiting valve 40. Because of such shared similarities, reference will be made to Fig. 1 for the description of components used in the flammability reduction system with heat load control (also referred to herein with reference numeral 10).

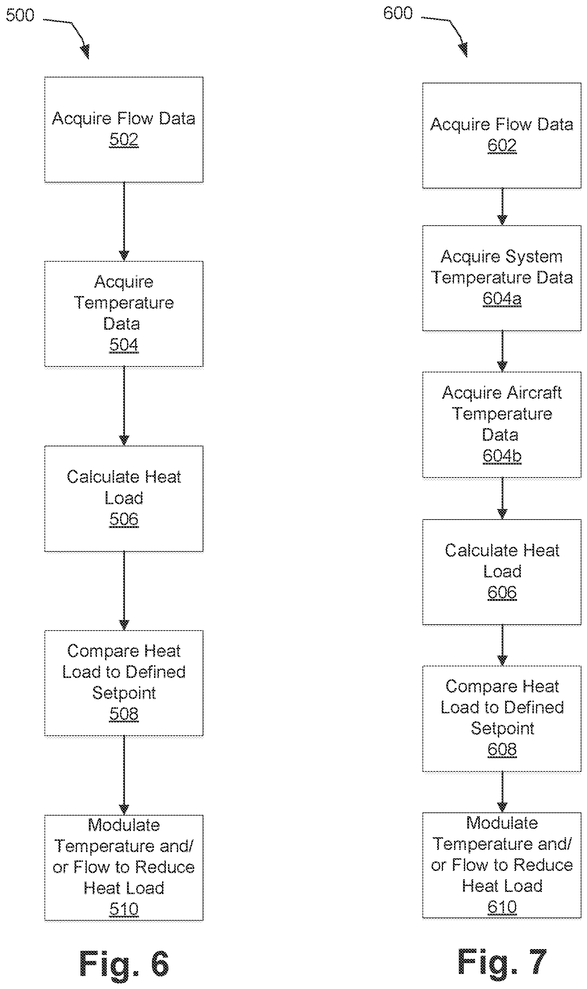

Turning to Fig. 6, an exemplary method 500 is shown for operating the flammability reduction system 10 to calculate and control heat load in the system. The method 500 may be at least partially executed by the controller 26 via suitable logic. As noted above, the method 500 or the system 10 can operate independently (i.e., without) the pressure limiting valve 40, and thus may operate independently from methods 100, 200, 300, 400 described above. It is understood, however, that the foregoing description of the system 10 and methods 100, 200, 300, 400 are equally applicable to the method 500, and therefore steps may be substituted for one another or used in conjunction with one another where applicable.

At step 502, the method 500 may include the controller 26 acquiring flow data of the air passing to the inlet of the ASM 20. The flow data may include readings of the actual air flow rate sensed by the flow sensor 34 upstream of the ASM 20, which this data is communicated to the controller 26 via a suitable communications link. In another embodiment, instead of measuring actual air flow, the air flow could be calculated using actual sensed pressure such as via pressure sensor 33c.

At step 504, the method 500 may include the controller 26 acquiring temperature data. The temperature data may include readings of actual temperature of the air at one or more locations in the system 10. For example, the readings may include actual temperature of the air sensed by the temperature sensor 32a (upstream of heat exchanger 16) and the actual temperature sensed at temperature sensor 32b (downstream of heat exchanger 16). In another embodiment, instead of actual temperature sensing, the temperature of air at the position of sensor 32a can be assumed.

At step 506, the method 500 includes calculating heat load using the data acquired (or calculated) in steps 502 and 504. The heat load may be calculated by the equation: Q = ṁ x Cp x ΔT, where Q is heat load (W or BTU/hr.), m is mass flow rate (kg/s or lb./hr.) calculated from the flow rate in step 602, Cp is specific heat (J/ (kg. °C) or BTU/(lb. °F)) which is effectively a constant, and ΔT is the change in temperature (°C or °F) from T0 (sensor 32a) to T1 (sensor 32b) in terms of T0-T1.

By way of example with reference to Fig. 1, T0 (sensor 32a upstream of heat exchanger 16) may be measured or assumed, and based on a temperature measurement at T1 (sensor 32b downstream of heat exchanger 16) being relatively high, this means, assuming mass flow rate is constant, the heat exchanger 16 is not rejecting as much heat to the cooling channel 27, and so the heat load (Q, shown at 50 as heat rejection) will be relatively low. On the other hand, if T1 is relatively low, this means, assuming mass flow rate is constant, the heat exchanger 16 is rejecting a significant amount of heat to the cooling channel 27, and so the heat load (Q, shown at 50 as heat rejection) will be relatively high.

Alternatively or additionally, reducing the flow rate (ṁ) by reducing the pressure of air passing to the ASM inlet (e.g., at pressure sensor 33c) while keeping the ΔT constant is another way of reducing heat load (Q). By way of example, this may be achieved by using the modulating pressure limiting valve 40 to reduce pressure at P2 (sensor 33c) while keeping the temperature drop from T0 to T1 (sensor 32a to 32b) constant.

As described above, the heat load (Q) in terms of heat rejection 50 by the heat exchanger 16 is considered a "cost" to the system 10, since the greater the heat load required, generally the larger the heat exchanger 16 must be. In addition, a greater amount of heat rejected into the cooling channel 27 also will generally render the external heat exchanger 28 less effective. Therefore, to reduce such cost in terms of heat load and size of heat exchanger 16 (and/or heat exchanger 28), the exemplary system may utilize method 500 to control (e.g., reduce) heat load of the system.

At step 508, the method 500 includes comparing the heat load calculated at step 506 to a heat load setpoint. The defined heat load setpoint may be a predetermined setpoint that is based upon the construction of the system 10, and particularly the heat exchanger 16 or other support components. For example, the defined heat load setpoint may be the minimum heat load or heat rejection from the system 10 that provides for a prescribed or maximum ASM inlet temperature. This defined heat load setpoint may include a particular setpoint value, or may include a range of values about a nominal setpoint value, such as within a tolerance range of plus-or-minus 10% of the nominal setpoint value. The defined heat load setpoint, including the nominal value(s) and/or tolerance level may be stored in memory of the controller 26, calculated by the controller 26, or provided by an external device, e.g., a flight control computer or the like. The defined heat load setpoint may be a predefined static setpoint, or may be a dynamically adjustable defined heat load setpoint that is based on the state of the system 10. For example, a database including a lookup table may be used to adjust the defined heat load setpoint based on parameters, such as over the life of the ASM 20, or the defined heat load setpoint may be adjusted more dynamically based on other aircraft data or characteristics, such as flight mode, atmospheric pressure, altitude, vertical speed, bleed pressure, engine performance (speed, etc.), flight schedule (duration, remaining time, etc.); or other flight indicators such as climbing, descending, cruising; or the like.

At step 510, based on the comparison in step 508, if the controller 26 determines that the calculated heat load is greater than the defined heat load setpoint, then the controller 26 will command for a reduction in heat load. In the illustrated system 10, the command for reducing heat load may be for increasing T1 temperature at temperature sensor 32b (downstream of heat exchanger 16) which is accomplished by the controller 26 commanding the bypass valve 30 to open further and therefore bypass heat rejected by the heat exchanger 16. Alternatively or additionally, the command for reducing heat load may be for reducing flow rate by reducing the pressure of air passing to the ASM inlet (e.g., at P2).

The exemplary method 500 is advantageous in that the heat load calculation may be used to modify ASM inlet temperature control setpoint and/or the pressure control setpoint at in order to keep heat load below a defined threshold. The amount of temperature increase at T1 versus reducing the pressure at P2 to not exceed a maximum heat load is based on system performance requirements and component temperature limits. The system therefore balances the costs of heat load, ASM flow, ASM life, and/or necessary performance/product flow via variance of the ASM inlet temperature setpoint.

Referring to Fig. 7, another exemplary logical operation 600 is shown for operating the flammability reduction system 10 to calculate and control heat load in the system. The method 600 is substantially the same as method 500, except for using aircraft signals or other aircraft data for calculating the heat load (as described below), and consequently the same reference numerals but in the 600-series will be used to denote logical operations corresponding to similar operations in the method 500. As such, the foregoing description of the method 500 is equally applicable to the method 600, except as noted below. This includes the method 600 being at least partially executed by the controller 26 via suitable logic. The system and method 600 is different from the system and method 500, however, in that the method 600 uses aircraft signals as additional inputs into the heat load calculation, as described in further detail below.

Step 602 is similar to step 502 described above, and may include the controller 26 acquiring flow data of the air passing to the inlet of the ASM 20.

At step 604a, the method 600 may include the controller 26 acquiring temperature data from the system 10, which may include the actual temperature sensed at temperature sensor 32b (e.g., downstream of heat exchanger 16 and passing to the ASM 20).

At step 604b, instead of measuring actual temperature at T0 (sensor 32a), the method 600 receives temperature data or assumes temperature at T0 based on aircraft signals 44 which may be received into the controller 26 from one or more other controller(s) or computer(s) of the aircraft, or from one or more other sensors on the aircraft, which such device(s) may include measurement equipment and/or a flight control computer 43 used for flight performance. This is shown in Fig. 1 by the connection of temperature sensor 32a to the flight computer 43 via communications link 52. For example, it is possible that: 1) one or more system sensors could be connected to other devices (e.g., flight computer 43) that then feed to the controller 26 that controls heat load, and/or 2) other aircraft signals such as vertical speed, altitude, ambient temperature, etc., could be used in calculation of heat load.

Step 606 is similar to step 506 described above, and includes calculating heat load using the data acquired (or calculated) in steps 602, 604a and 604b.

Step 608 is similar to step 508 described above, and includes comparing the heat load calculated at step 608 to a heat load setpoint as noted above.

Step 610 is similar to step 510 described above, and includes the controller 26 sending a command signal for a reduction in heat load. As described above, the command signal may be a command to the bypass valve 30 to increase T1 temperature by providing more bypass around heat exchanger 16; or may be a command to the modulating valve 40 to reduce flow rate by reducing pressure of air passing to the ASM 20.

In the systems or methods shown in Figs. 2-7, it is understood that in some examples, program elements like temporary variables, routine loops, and so on, are not shown. It is further understood that electronic and software applications may involve dynamic and flexible processes so that the illustrated blocks can be performed in other sequences that are different from those shown or that blocks may be combined or separated into multiple components. Although Figs. 2-7 each shows a specific order of executing functional logic blocks, the order of executing the blocks may be changed relative to the order shown. Also, two or more blocks shown in succession may be executed concurrently or with partial concurrence. Certain blocks also may be omitted, for example, those boxes in broken line. In addition, any number of functions, logical operations, commands, state variables, etc. may be added to the logical flow for purposes of enhanced utility, performance, measurement, troubleshooting, and the like. It is understood that all such variations are within the scope of the present invention, insofar as they fall within the scope of the appended claims.

As used herein, an "operative connection," or a connection by which entities are "operatively connected," is one in which signals, physical communications, or logical communications may be sent or received. Typically, an operative connection includes a physical interface, an electrical interface, or a data interface, but it is to be noted that an operable connection may include differing combinations of these or other types of connections sufficient to allow operative control. For example, two entities can be operatively connected by being able to communicate signals to each other directly or through one or more intermediate entities like a processor, operating system, a logic, software, or other entity. Logical or physical communication channels can be used to create an operative connection.

It is understood that embodiments according to the present disclosure can be implemented in combination with digital electronic circuitry, controllers, processors, computer software, firmware, and/or hardware. For example, embodiments may be implemented in a flammability reduction system that uses one or more modules of computer program instructions encoded on a non-transitory computer-readable medium for execution by, or to control the operation of, data processing apparatus.

In the flow diagram(s), blocks may denote "processing blocks" that may be implemented with logic. The processing blocks may represent a method step or an apparatus element for performing the method step. A flow diagram does not depict syntax for any particular programming language, methodology, or style (e.g., procedural, object-oriented). Rather, a flow diagram illustrates functional information one skilled in the art may employ to develop logic to perform the illustrated processing. It will be appreciated that in some examples, program elements like temporary variables, routine loops, and so on, are not shown. It will be further appreciated that electronic and software applications may involve dynamic and flexible processes so that the illustrated blocks can be performed in other sequences that are different from those shown or that blocks may be combined or separated into multiple components.

"Logic," as used herein, includes but is not limited to hardware, firmware, software or combinations of each to perform a function(s) or an action(s), or to cause a function or action from another logic, method, or system. F or example, based on a desired application or needs, logic may include a software controlled microprocessor, discrete logic like an application specific integrated circuit (ASIC), a programmed logic device, a memory device containing instructions, or the like. Logic may include one or more gates, combinations of gates, or other circuit components. Logic may also be fully embodied as software. Where multiple logical logics are described, it may be possible to incorporate the multiple logical logics into one physical logic. Similarly, where a single logical logic is described, it may be possible to distribute that single logical logic between multiple physical logics.

Algorithmic descriptions and representations used herein are the means used by those skilled in the art to convey the substance of their work to others. An algorithm or method is here, and generally, conceived to be a sequence of operations that produce a result. The operations may include physical manipulations of physical quantities. Usually, though not necessarily, the physical quantities take the form of electrical or magnetic signals capable of being stored, transferred, combined, compared, and otherwise manipulated in a logic and the like. It has proven convenient at times, principally for reasons of common usage, to refer to these signals as bits, values, elements, symbols, characters, terms, numbers, or the like. It should be borne in mind, however, that these and similar terms are to be associated with the appropriate physical quantities and are merely convenient labels applied to these quantities.

Unless specifically stated otherwise, it is appreciated that throughout the description, terms like processing, computing, calculating, determining, displaying, or the like, refer to actions and processes of a computer system, logic, processor, or similar electronic device that manipulates and transforms data represented as physical (electronic) quantities. It will be appreciated that the processes may be implemented using various programming approaches like machine language, procedural, object oriented or artificial intelligence techniques. In one example, methodologies are implemented as processor executable instructions or operations provided on a computer-readable medium. Thus, in one example, a computer-readable medium may store processor executable instructions operable to perform a method. The computer-readable medium may be a hard-drive, a machine-readable storage device, a memory device, or a combination of one or more of them.

The controller may include all apparatus, devices, and machines for processing data, including electronic control circuitry that is configured to carry out various control operations relating to control of the system. The control circuitry may be special or general purpose circuitry. The controller may include, by way of example a programmable processor, a computer, or multiple processors or computers. For example, the primary control circuit may include an electronic processor, such as a CPU, microcontroller or microprocessor. The operative connection(s) of the controller to the system includes those in which signals, physical communications, or logical communications may be sent or received. Typically, an operable connection includes a physical interface, an electrical interface, or a data interface, but it is to be noted that an operable connection may include differing combinations of these or other types of connections sufficient to allow operable control.

The controller may include, in addition to hardware, code that creates an execution environment for the computer program in question. Among their functions, to implement the features described herein, the control circuit and/or electronic processor may comprise an electronic controller that may execute program code embodied as the system control application. It will be apparent to a person having ordinary skill in the art of computer programming, and specifically in application programming for electronic and communication devices, how to program the device to operate and carry out logical functions and instructions associated with the control application. The computer program (also referred to as software or code), may be deployed in any form, including as a stand-alone program or as a module, component, subroutine, or other unit suitable for use in a computing environment. The computer program may be deployed to be executed on one computer or on multiple computers that are located at one site or distributed across multiple sites and interconnected by a communication network.

The processor may include all apparatus, devices, electronic circuitry, and machines suitable for processing data, including the execution of a computer program. The processor may include, by way of example, both general and special purpose microprocessors, and any one or more processors of any kind of digital computer. Generally, the processor will receive instructions and data from a read-only memory or a random access memory or both. The computer may include, or be operatively coupled to receive data from or transfer data to, or both, one or more mass storage devices for storing data. Devices suitable for storing computer program instructions and data include all forms of non-volatile memory, media and memory devices, including by way of example semiconductor memory devices. The processor and the memory can be supplemented by, or incorporated in, special purpose logic circuitry.

To provide for interaction with a user, embodiments may be implemented using a computer having a display device and an input device. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. Embodiments may include a computing system that includes a back-end component (e.g., as a data server), or that includes a middleware component (e.g., an application server), or that includes a front-end component (e.g., a client computer having a graphical user interface through which a user can interact with an implementation of the subject matter described is this specification), or any combination of one or more such back-end, middleware, or front-end components. The components of the system can be interconnected by any form or medium of digital data communication.

It is understood that unless specifically stated otherwise, references to "a," "an," and/or "the" may include one or more than one, and that reference to an item in the singular may also include the item in the plural.

The phrase "and/or" should be understood to mean "either or both" of the elements so conjoined, i.e., elements that are conjunctively present in some cases and disjunctively present in other cases. Other elements may optionally be present other than the elements specifically identified by the "and/or" clause, whether related or unrelated to those elements specifically identified unless clearly indicated to the contrary. Thus, as a non-limiting example, a reference to "A and/or B," when used in conjunction with open-ended language such as "comprising" can refer, in one embodiment, to A without B (optionally including elements other than B); in another embodiment, to B without A (optionally including elements other than A); in yet another embodiment, to both A and B (optionally including other elements); etc.

The word "or" should be understood to have the same meaning as "and/or" as defined above. For example, when separating items in a list, "or" or "and/or" shall be interpreted as being inclusive, i.e., the inclusion of at least one, but also including more than one, of a number or list of elements, and, optionally, additional unlisted items. Only terms clearly indicated to the contrary, such as "only one of" or "exactly one of," may refer to the inclusion of exactly one element of a number or list of elements. In general, the term "or" as used herein shall only be interpreted as indicating exclusive alternatives (i.e. "one or the other but not both") when preceded by terms of exclusivity, such as "either," "one of," "only one of," or "exactly one of."

The transitional words or phrases, such as "comprising," "including," "carrying," "having," "containing," "involving," "holding," and the like, are to be understood to be open-ended, i.e., to mean including but not limited to.

Although the invention has been shown and described with respect to a certain embodiment or embodiments, it is obvious that alterations and modifications will occur to others skilled in the art upon the reading and understanding of this specification and the annexed drawings, insofar as they fall within the scope of the appended claims. In particular regard to the various functions performed by the above described elements (components, assemblies, devices, compositions, etc.), the terms (including a reference to a "means") used to describe such elements are intended to correspond, unless otherwise indicated, to any element which performs the specified function of the described element (i.e., that is functionally equivalent), even though not structurally equivalent to the disclosed structure which performs the function in the herein illustrated exemplary embodiment or embodiments of the invention, insofar as such elements fall within the scope of the appended claims. In addition, while a particular feature of the invention may have been described above with respect to only one or more of several illustrated embodiments, such feature may be combined with one or more other features of the other embodiments, as may be desired and advantageous for any given or particular application, insofar as such combinations fall within the scope of the appended claims.

## Claims

1. A flammability reduction system (10) comprising:
an air separation module, ASM (20), configured to receive air at an inlet of the ASM and produce an inert gas;
a flow sensor (34) configured to measure air flow passing to the inlet of the ASM (20) and an oxygen sensor (35) configured to measure oxygen content of the inert gas produced by the ASM (20); and
an electronic controller (26) configured to detect trends in ASM performance by comparing (i) a trend of actual flow rate of air passing to the inlet of the ASM (20) over a period of time compared against an expected healthy trend of flow rate of air passing to the inlet of the ASM over the period of time, and (ii) a trend of actual oxygen content of the inert gas produced by the ASM (20) over the period of time compared against an expected healthy trend of oxygen content of inert gas produced by the ASM over the period of time, to thereby verify health of the ASM and/or predict ASM life based on the detected trends in ASM performance.

2. The flammability reduction system according to claim 1, wherein a data storage module (48) is affixed to the ASM (20) upon which is stored service life history data of the ASM.

3. A method (400) of operating the flammability reduction system (10) according to any preceding claim, comprising:
acquiring (402) air flow data of the air passing to the ASM (20); acquiring (404) oxygen content data of the inert gas produced by the ASM (20);
determining (406) metrics based at least upon the acquired air flow data and the acquired oxygen content data, wherein the determined metrics include the acquired air flow data over the period of time and the acquired oxygen content data over the period of time;
comparing (408) trends in the determined metrics by comparing the trend of the acquired air flow data over the period of time to the trend of actual oxygen content data of the inert gas produced by the ASM (20) over the period of time to determine whether the compared trends correlate with predefined known data for a healthy ASM; and
determining (410) the health of the ASM (20) based at least upon the compared trends.

## Patentansprüche

1. Ein Entflammbarkeitsreduktionssystem (10), das Folgendes beinhaltet:
ein Lufttrennungsmodul, ASM (20), das konfiguriert ist, um Luft an einem Einlass des ASM aufzunehmen und ein Inertgas zu erzeugen;
einen Durchflusssensor (34), der konfiguriert ist, um den zum Einlass des ASM (20) fließenden Luftstrom zu messen, und einen Sauerstoffsensor (35), der konfiguriert ist, um den Sauerstoffgehalt des vom ASM (20) erzeugten Inertgases zu messen; und
eine elektronische Steuerung (26), die konfiguriert ist, um Trends in der ASM-Leistung durch Vergleichen (i) eines Trends der tatsächlichen Durchflussrate der zum Einlass des ASM (20) fließenden Luft über einen Zeitraum im Vergleich zu einem erwarteten intakten Trend der Durchflussrate der zum Einlass des ASM fließenden Luft über den Zeitraum und (ii) eines Trends des tatsächlichen Sauerstoffgehalts des vom ASM (20) erzeugten Inertgases über den Zeitraum im Vergleich zu einem erwarteten intakten Trend des Sauerstoffgehalts des vom ASM erzeugten Inertgases über den Zeitraum zu erkennen, um dadurch die Funktionsfähigkeit des ASM zu verifizieren und/oder die Lebensdauer des ASM basierend auf den erkannten Trends in der ASM-Leistung vorherzusagen.

2. Entflammbarkeitsreduktionssystem gemäß Anspruch 1, wobei ein Datenspeichermodul (48) an dem ASM (20) angebracht ist, auf dem Nutzungsdauerverlaufsdaten des ASM gespeichert sind.

3. Ein Verfahren (400) zum Betreiben des Entflammbarkeitsreduktionssystems (10) gemäß einem der vorhergehenden Ansprüche, das Folgendes beinhaltet:
Erfassen (402) von Luftstromdaten der zum ASM (20) fließenden Luft;
Erfassen (404) von Sauerstoffgehaltdaten des vom ASM (20) erzeugten Inertgases;
Bestimmen (406) von Metriken basierend mindestens auf den erfassten Luftstromdaten und den erfassten Sauerstoffgehaltdaten, wobei die bestimmten Metriken die erfassten Luftstromdaten über den Zeitraum und die erfassten Sauerstoffgehaltdaten über den Zeitraum umfassen;
Vergleichen (408) von Trends in den bestimmten Metriken durch Vergleichen des Trends der erfassten Luftstromdaten über den Zeitraum mit dem Trend der tatsächlichen Sauerstoffgehaltdaten des vom ASM (20) erzeugten Inertgases über den Zeitraum, um zu bestimmen, ob die verglichenen Trends mit vordefinierten bekannten Daten für ein intaktes ASM korrelieren; und
Bestimmen (410) der Funktionsfähigkeit des ASM (20) basierend mindestens auf den verglichenen Trends.

## Revendications

1. Un système de réduction d'inflammabilité (10) comprenant :
un module de séparation d'air, ASM (20), configuré pour recevoir de l'air à une entrée de l'ASM et produire un gaz inerte ;
un capteur d'écoulement (34) configuré pour mesurer un écoulement d'air passant jusqu'à l'entrée de l'ASM (20) et un capteur d'oxygène (35) configuré pour mesurer une teneur en oxygène du gaz inerte produit par l'ASM (20) ; et
un contrôleur électronique (26) configuré pour détecter des tendances dans la performance de l'ASM en comparant (i) une tendance de débit réel d'air passant jusqu'à l'entrée de l'ASM (20) sur une période de temps comparée à une tendance saine attendue de débit d'air passant jusqu'à l'entrée de l'ASM sur la période de temps,
et (ii) une tendance de teneur en oxygène réelle du gaz inerte produit par l'ASM (20) sur la période de temps comparée à une tendance saine attendue de teneur en oxygène de gaz inerte produit par l'ASM sur la période de temps, pour vérifier de ce fait la santé de l'ASM et/ou prédire la durée de vie de l'ASM sur la base des tendances détectées dans la performance de l'ASM.

2. Le système de réduction d'inflammabilité selon la revendication 1, dans lequel un module de stockage de données (48) est fixé à l'ASM (20) sur lequel sont stockées des données d'historique de durée de vie de service de l'ASM.

3. Un procédé (400) de fonctionnement du système de réduction d'inflammabilité (10) selon n'importe quelle revendication précédente, comprenant :
l'acquisition (402) de données d'écoulement d'air de l'air passant jusqu'à l'ASM (20) ;
l'acquisition (404) de données de teneur en oxygène du gaz inerte produit par l'ASM (20) ;
la détermination (406) de métriques sur la base au moins des données d'écoulement d'air acquises et des données de teneur en oxygène acquises, dans lequel les métriques déterminées incluent les données d'écoulement d'air acquises sur la période de temps et les données de teneur en oxygène acquises sur la période de temps ;
la comparaison (408) de tendances dans les métriques déterminées en comparant la tendance des données d'écoulement d'air acquises sur la période de temps à la tendance de données de teneur en oxygène réelle du gaz inerte produit par l'ASM (20) sur la période de temps pour déterminer si les tendances comparées sont en corrélation avec des données connues prédéfinies pour un ASM sain ; et
la détermination (410) de la santé de l'ASM (20) sur la base au moins des tendances comparées.
